(19) Europäisches Patentamt
European Patent Office
Office européen des brevets

(11) **EP 2 312 323 B1**

(12) **EUROPÄISCHE PATENTSCHRIFT**

(45) Veröffentlichungstag und Bekanntmachung des Hinweises auf die Patenterteilung:
**12.03.2014   Patentblatt 2014/11**

(51) Int Cl.:
**G01P 5/07** *(2006.01)*      **G01P 21/02** *(2006.01)*

(21) Anmeldenummer: **10177761.3**

(22) Anmeldetag: **21.09.2010**

(54) **Anemometer**

Anemometer

Anémomètre

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.10.2009   DE 102009044201**

(43) Veröffentlichungstag der Anmeldung:
**20.04.2011   Patentblatt 2011/16**

(73) Patentinhaber: **Fernsteuergeräte Kurt Oelsch GmbH**
**12347 Berlin (DE)**

(72) Erfinder: **Jahn, Volker**
**15712, Königs-Wusterhausen (DE)**

(74) Vertreter: **Willems, Volker et al**
**Patentanwälte Weisse, Moltmann & Willems**
**Partnerschaftsgesellschaft**
**Bökenbuschstraße 41**
**42555 Velbert (DE)**

(56) Entgegenhaltungen:
**EP-A1- 2 037 284      WO-A1-01/35109**
**US-A- 3 360 989      US-A1- 2007 046 480**

## Beschreibung

### Technisches Gebiet

Die Erfindung betrifft ein Anemometer zum Messen von Windgeschwindigkeiten, wobei das Anemometer als Schalensternanemometer oder als Flügelrad Anemometer ausgebildet ist, enthaltend:

a) ein Gehäuse und/oder Rahmen,

b) eine Welle, welche drehbar in einem Lager des Gehäuses und/oder Rahmen gelagert ist,

c) Windaufnahmemittel, welche an der Welle angeordnet sind, wobei die Windaufnahmemittel die Welle bei Wind in Rotation versetzt, wobei die Windaufnahmemittel als halbkugelartige Schalen oder als flügel- oder *turbinenartige Schaufeln ausgebildet sind,*

d) Erfassungsmittel zur Erfassung der Rotationsgeschwindigkeit der Welle,

e) Ausgabemittel zur Ausgabe der so erfassten Rotationsgeschwindigkeit,

f) wobei die Erfassungsmittel und die Ausgabemittel als ein Spannungsgenerator ausgebildet sind.

### Stand der Technik

Anemometer sind Geräte zum Messen der Windgeschwindigkeit. Eines der verbreitetesten Anemometer ist das sogenannte Schalenstemanemometer. Bei dem Schalenstemanemometer wird die Windgeschwindigkeit mit horizontaler Drehkreisebene und senkrecht stehender Rotationsachse auf einer Welle montiertes Windrad aus mindestens zwei, meist jedoch drei oder vier halbkugelartigen Schalen vom Wind angetrieben. Dazu sind die halbkugelartigen Schalen sternförmig um eine Welle angeordnet.

Die Welle ist dabei in einem Gehäuse oder Rahmen drehbar gelagert. Der Wind greift in die halbkugelartigen Schalen und treibt so die Welle um ihre Rotationsachse an. Über die Rotationsgeschwindigkeit der Welle lässt sich die Windgeschwindigkeit ermitteln. Das Schalenstemanemometer ist wegen seiner einfachen Bauweise, wegen der relativen Wartungsfreiheit und seines robusten mechanischen Aufbaus ein bevorzugtes Messsystem. Zudem arbeitet das System ohne Windrichtungsführung. Ferner ist keine aufwendige Messtechnik nötig, da unmittelbar entweder durch optische oder elektromagnetische Impulsgebung ein Signal erzeugt wird.

Es sind Schalenstemanemometer bekannt die eine mechanisch funktionierende Anzeige aufweisen, deren Umdrehungszahlen über ein Uhrwerk dargestellt werden. Nur die Windstärke bedingt die Geschwindigkeit der Rotation des Schalensterns und kann durch letztere ermittelt werden.

Für die elektromagnetische Impulsgebung ist beispielsweise ein Spannungsgenerator mit der Welle gekoppelt. Der Spannungsgenerator erzeugt eine zur Rotationsgeschwindigkeit proportionale elektrische Spannung, welche mit analogen oder auch digitalen Auswert-und Anzeigemitteln in eine Windgeschwindigkeit umgerechnet und angezeigt werden kann.

Nach einem ähnlichen Prinzip arbeitet das sogenannte Flügelrad-Anemometer. Der Wind versetzt ein Flügelrad, welches sich um eine horizontale Achse dreht, in Bewegung. Die Umdrehungsgeschwindigkeit des Flügelrades repräsentiert die Windgeschwindigkeit. Bei sehr niedrigen Windgeschwindigkeiten ist die Messung wegen der notwendigen Überwindung des Anlaufwiderstandes, der auch bei relativ niedrigen Reibungswiderständen im Drehlager des Flügelrades noch vorhanden ist, etwas ungenau. Moderne Flügelrad-Anemometer sind meist kleine handliche Geräte für den mobilen Betrieb, größere, stationäre Flügelräder mit Wetterfahne zur Nachführung desselben in die Windrichtung werden an manchen Wetterstationen eingesetzt. Sie werden ansonsten stationär zum Messen relativ schwacher Strömungen zu Forschungszwecken in Windkanälen eingesetzt.

Die Druckschrift DE 101 44 606 A1 offenbart ein Schalenstemanemometer. Dort wird auch das Problem erkannt, dass das Messergebnis für die Windgeschwindigkeit nicht unerheblich von der Leichtgänigkeit der Lager, in denen die Welle gelagert ist, beeinflusst wird. Dort wird festgestellt, dass Lagerschäden durch eine zu geringe Lagerbelastung verursacht werden. Dieser genannte Stand der Technik löst das Problem durch eine geänderte Anordnung bzw. Statik, wobei der Schalenstern weit aus dem Gehäuse herausragt. Es lässt sich bei dieser Anordnung jedoch nicht feststellen, wie groß der Einfluss der Leichtgänigkeit der Lager auf das Messergebnis ist.

Die genannten Anemometer werden zudem bei Wind und Wetter eingesetzt. Sie unterliegen daher auch Temperaturunterschieden bis hin zu Vereisungen. Ferner haben Verschmutzungen, sowie Verschleiß nicht unerheblich Einfluss auf die Leichtgängigkeit der Welle, welche in den Lagern drehbar gelagert ist. Auch wenn ein Anemometer vollständig festsitzt und damit funktionsuntüchtig ist, lässt sich das bei den bekannten Anemometern nicht feststellen.

Da diese Messgeräte bspw. auch bei Kränen u. dgl. verwendet werden, kann es bei einem fehlerhaftem Messsignal bzgl. der Windgeschwindigkeit zu gefährlichen Situationen kommen, indem z.B. eine geringere Windgeschwindigkeit angezeigt wird, als tatsächlich vorliegt. So wird ein Kran unter Umständen betätigt, obwohl er gar nicht für die tatsächliche und zu starke Windgeschwindigkeit ausgelegt ist.

Aus der US 2007/0046480 A1 ist ein Schalensternanemometer bekannt. Dieses Schalensternanemometer verfügt über eine in einem Gehäuse drehbar gelagerte Welle, über welche die Rotationsgeschwindigkeit abgegriffen wird. Ein Windgeschwindigkeitssensor ist dazu als Spannungsgenerator ausgebildet, wobei die Welle den Rotor des Spannungsgenerators bildet. Einfluss der Reibung der drehbar gelagerten Welle ist hier nicht ermittelbar.

In der US 3,360,989 wird ein Schalensternanemometer offenbart. Hier wird auch der Einfluss der Reibung auf die Welle bemängelt. Es wird dort daher vorgeschlagen, die Welle mit einem Motor mit konstanter Winkelgeschwindigkeit anzutreiben, um eine Messgröße für die Reibung zu erhalten. Die Messgröße wird dabei über die Antriebskraft ermittelt. Die Windgeschwindigkeit wird dabei aber nicht über einen Spannungsgenerator ermittelt, dessen Rotor die Welle bildet.

Die EP 2037284 A1 beschreibt eine Vorrichtung und ein Verfahren zum Testen eines Anemometers. Die Welle des Anemometers wird dabei temporär mit einem Motor gekoppelt, welcher die Welle Rotieren lässt. Der Motor wird dabei jedoch nicht zur Ermittlung der Rotationsgeschwindigkeit herangezogen.

Auch die WO 01/35109 A1 beschreibt ein Anemometer, welches zum Testen der Reibung der Welle ausgebildet ist. Ein elektrischer Antrieb bringt die Welle in Rotation mit konstanter Winkelgeschwindigkeit. Dabei lässt sich ein Drehmoment, welches durch Reibung der Welle verursacht wird ermitteln.

## Offenbarung der Erfindung

Aufgabe der Erfindung ist es daher, die Nachteile des Standes der Technik zu vermeiden und ein Anemometer zu schaffen, bei dem der Einfluss der Reibung der drehbar gelagerten Welle feststellbar ist.

Erfindungsgemäß wird die Aufgabe dadurch gelöst, dass bei einem Anemometer zum Messen von Windgeschwindigkeiten der eingangs genannten Art

f) Antriebsmittel für die Welle vorgesehen sind, wobei Mess- und Verarbeitungsmittel zur Bestimmung und Verarbeitung von Antriebsmomenten vorgesehen sind, *wobei* die Antriebsmittel als ein Elektromotor ausgebildet sind und wobei der Spannungsgenerator im Umkehrbetrieb den Elektromotor bildet.

Die Erfindung beruht auf dem Prinzip eines Selbsttestes des Anemometers. Die Welle des Anemometers wird dazu durch einen Antrieb angetrieben. Bei einem Widerstand, welcher bspw. durch Lagerreibung und/oder Vereisung verursacht sein kann, wird die Leistungsaufnahme der Antriebsmittel messbar größer. Dadurch lässt sich erkennen, wie groß dieser Widerstand ist. Um Rotationsgeschwindigkeit $\omega$ zu erhöhen, ist ein Antriebsmoment $M_A$ erforderlich. Über das Verhältnis aus Antriebsmoment $M_A$ und einer Rotationsgeschwindigkeitdifferenz $\Delta\omega$ lässt sich ein zur Lagerreibung proportionaler Wert $M_R$ bestimmen:

$$M_R \sim \frac{M_A}{\Delta\omega}$$

Damit lassen sich Aussagen darüber treffen, wie groß die Verfälschung des Messergebnis bei einer Windgeschwindigkeitsmessung mit dem Anemometer ist.

Als vorteilhafte Ausgestaltung des erfindungsgemäßen Anemometers hat sich erwiesen, wenn die Erfassungsmittel und die Ausgabemittel als ein Spannungsgenerator ausgebildet sind. Durch die Rotation der Welle wird ein Spannungsgenerator angetrieben, der eine zur Rotationsgeschwindigkeit proportionale Spannung erzeugt. Diese Spannung kann mit einem Messgerät abgegriffen und z.B. in einen Rotationsgeschwindigkeitswert umgewandelt werden.

In einer weiteren vorteilhaften Ausgestaltung der Erfindung sind die Antriebsmittel als ein Elektromotor ausgebildet. Zum einen lässt sich der Antrieb, welcher als Elektromotor ausgebildet ist, relativ leicht realisieren und zum anderen kann die Leistungsaufnahme des Elektromotors problemlos ermittelt werden. Damit erhält man auf einfache Weise das Antriebsmoment $M_A$ über die Leistungsaufnahme.

In einer besonders bevorzugten Ausgestaltung des erfindungsgemäßen Anemometers sind die Erfassungsmittel und die Ausgabemittel als ein Spannungsgenerator und die Antriebsmittel als ein Elektromotor ausgebildet, wobei der Spannungsgenerator im Umkehrbetrieb den Elektromotor bildet. Mit dieser Maßnahme wird nicht nur eine extrem kompakte und leichte Variante erreicht, sondern auch eine besonders kostengünstige. Denn der Spannungsgenerator wird zum einen dazu verwendet, um die Rotationsgeschwindigkeit $\omega$ zu ermitteln, und im umgekehrten Betrieb durch Anlegen einer Spannung gleichzeitig als Elektromotor zu fungieren, um das Antriebsmoment $M_A$ zu bestimmen.

Eine bevorzugte Variante ergibt sich dadurch, dass der Elektromotor als Synchronmotor ausgebildet ist. Ein Anemometer mit einem solchen Antrieb für einen Selbsttest lässt sich relativ einfach realisieren. Bei dem Synchronmotor wird ein konstant magnetisierter Rotor synchron von einem bewegten magnetischen Drehfeld mitgenommen. Der Rotor ist von Statoren umgeben, welche das Drehfeld erzeugen. Der laufende Synchronmotor hat eine zu einer Wechselspannung synchrone Bewegung.

Als vorteilhafte Weiterbildung des Synchronmotors ist in einer Ausgestaltung der Erfindung der Elektromotor als Schrittmotor ausgebildet. Dabei rotiert der Rotor durch ein gesteuertes schrittweise rotierendes elektromagnetisches Feld der Statorspulen um einen minimalen Winkel. Hier wird jede Spule einzeln angesteuert, so dass sich daraus die noch einfacher die Rotationsgeschwindigkeit bestimmen lässt.

Eine vorteilhafte Ausbildung des erfindungsgemäßen Anemometers ergibt sich, wenn eine Kupplung vorgesehen ist, mit welcher der Elektromotor zum Antrieb mit der Welle gekoppelt ist. Diese Maßnahme dient vorzugsweise auch dazu, bestehende Messsysteme einfach nachzurüsten um einen Selbsttest auch hier durchführen zu können. Außerdem können Standardteile verbaut werden, die sich mit der Kupplung gut zusammensetzen lassen.

Weiterhin erhält man dadurch eine vorteilhafte Ausgestaltung der Erfindung, dass das Anemometer als Schalenstemanemometer ausgebildet ist, wobei die Windaufnahmemittel als Windrad mit halbkugelartigen Schalen ausgebildet sind. Ein Schalenstemanemometer ist mechanisch besonders einfach aufgebaut, robust und wenig störanfällig. Dadurch lässt sich die Erfindung bei solchen Anemometern gut realisieren.

Als vorteilhafte Alternative zu dem Schalenstemanemometer ist das Anemometer als Flügelrad-Anemometer ausgebildet ist, wobei die Windaufnahmemittel als flügel- oder turbinenartige Schaufel ausgebildet sind. In einigen Anwendungsfällen kann es sinnvoll sein, ein Schalenstemanemometer zu nicht verwenden. In solchen Fällen kann das Flügelrad-Anemometer die bessere Wahl sein. Während bei dem Schalenstemanemometer das Windrad auch für ungewollte Umwelteinflüsse, wie beispielsweise Hagel oder Schnee, frei zugänglich ist, lässt sich ein Flügelrad-Anemometer besser gegen solche Umwelteinflüsse schützen. Dies kann ggf. verhindern, dass das Flügelrad beschädigt wird.

Weitere Ausgestaltungen und Vorteile ergeben sich aus dem Gegenstand der Unteransprüche.

## Kurze Beschreibung der Zeichnung

Fig. 1 zeigt in einer Prinzipskizze in einer dreidimensionalen Ansicht ein erfindungsgemäßes Anemometer, welches als Schalenstemanemometer ausgebildet ist.

Fig. 2 zeigt in einer Seitenansicht im Schnitt ein Schalenstemanemometer mit gekoppeltem Spannungsgenerator, welcher im Umkehrbetrieb als elektrischer Gleichstrommotor ausgebildet ist.

Fig. 3 zeigt in einer Seitenansicht eine Prinzipskizze eines Ausschnitts von einem Schalensternanemometer mit Magnetsensor und Statorspulen, welche zusammen mit dem Magneten einen elektrischen Schrittmotor bilden.

Fig.4 zeigt in einer Draufsicht einen Ausschnitt von einem Schalenstemanemometer gemäß Fig. 3.

## Bevorzugtes Ausführungsbeispiel

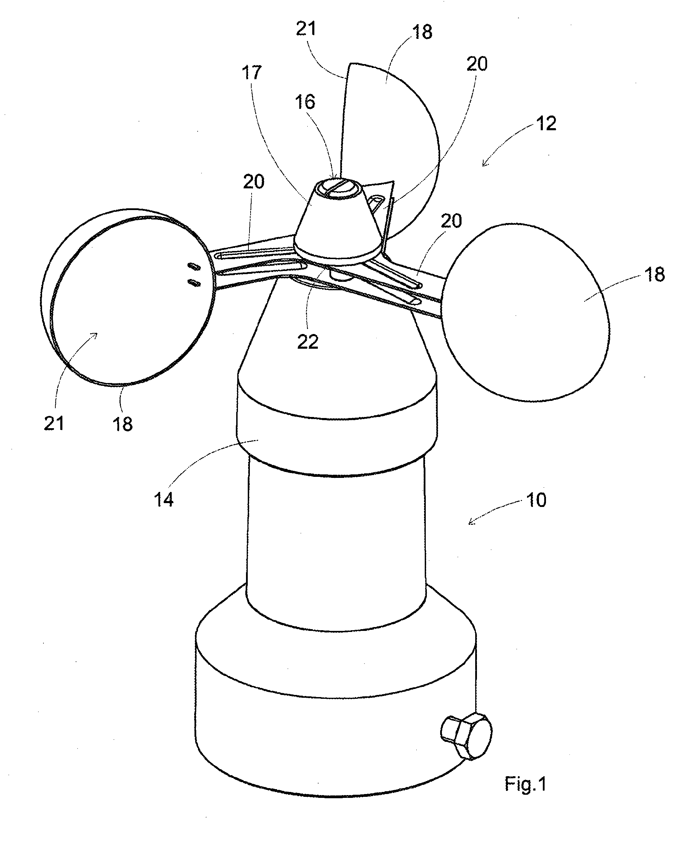

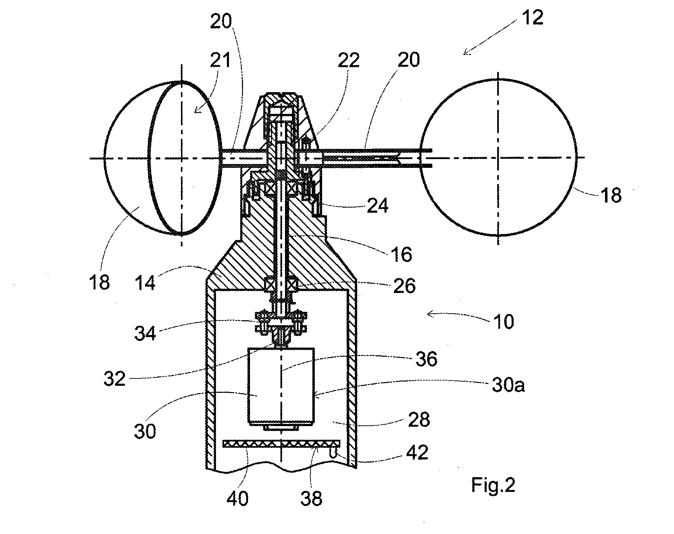

In Fig. 1 wird in einer Prinzipskizze ein Anemometer 10 in dreidimensionaler Ansicht dargestellt. Das Anemometer 10 ist als Schalenstemanemometer ausgebildet und weist ein als Windrad 12 ausgestaltete Windaufnahmemittel sowie ein Gehäuse 14 auf. In einer Drehkreisebene und einer senkrecht stehenden Rotationsachse 36 (siehe auch Fig. 2, 3 und 4) ist das Windrad 12 auf einer Welle 16 mit Befestigungsmitteln 17 fest montiert. Das Windrad 12 besteht im vorliegenden Ausführungsbeispiel aus drei halbkugelartigen Schalen 18, welche mit Speichen 20 über eine Nabe 22 mit der Welle 16 verbunden sind. Die Welle 16 ist in dem Gehäuse 14 drehbar gelagert. Offene Seiten 21 der drei halbkugelartigen Schalen 18 zeigen auf dem Drehkreis in die gleiche Richtung.

In Fig. 2 ist in einem Schnitt das Schalenstemanemometer 10 entsprechend zu Fig. 1 gezeigt. Gleiche Bestandteile sind daher mit identischen Bezugszeichen bezeichnet. Das Windrad 12 ist auf der Welle 16 über die Nabe 22 fest montiert. Die Welle 16 ist in Lagern 24, 26 drehbar gelagert und ragt in einen Hohlraum 28 des Gehäuses 14. In dem Hohlraum 28 befindet sich ein Spannungsgenerator 30. Eine An- bzw. Abtriebswelle 32 des Spannungsgenerators 30 ist über eine Kupplung 34 mit der Welle 16 gekoppelt. Die An- bzw. Abtriebswelle 32 und die Welle 16 fluchten über Rotationsachse 36. Unterhalb des Spannungsgenerators 30 befindet sich eine Elektronikschaltung 38, welche auf einer Platine 40 vorgesehen ist. Die Elektronikschaltung 38 dient insbesondere zur Verarbeitung eines von dem Spannungsgenerator 30 generierten Spannungssignals.

Durch Auftreffen von Wind auf die halbkugelartigen Schalen 18 des Windrads 12 wird die Welle 16 in Rotationsbewegung gesetzt. Die Welle 16 überträgt die Rotationsbewegung über die Kupplung 34 auf die An- bzw. Abtriebswelle 32 des Spannungsgenerators 30. Der Spannungsgenerators 30 erzeugt nun eine zu der mechanischen Rotationsbewegung proportionale elektrische Spannung. Der Spannungsgenerator 30 fungiert somit als Erfassungsmittel zur Erfassung der Rotationsbewegung und als Ausgabemittel. Er gibt nämlich eine zur Rotationsbewegung proportionale Spannung aus. Die Elektronikschaltung 38 greift dieses elektrische Spannungssignal ab und leitete dieses Signal oder einen entsprechend digitalisierten Signalwert an eine Schnittstelle 42 der Elektronikschaltung 38. Über die Schnittstelle 42 lässt sich das Anemometer 10 beispielsweise mit einer elektronischen Datenverarbeitungsanlage (EDV) als externe Verarbeitungseinheit verbinden. Eine solche externe Verarbeitungseinheit ist in vorliegenden Figuren nicht dargestellt. Diese externe Verarbeitungseinheit kann aus dem übertragenen Spannungswert einen entsprechenden Wert für die Windgeschwindigkeit errechnen.

Die Verarbeitungseinheit kann grundsätzlich aber auch auf der Platine 40 der Elektronikschaltung 38 angeordnet sein. Vorzugsweise verfügt die Verarbeitungseinheit dann über einen Mikroprozessor zur Steuerung der Verarbeitung.

Oft ist es gar nicht erforderlich, dass die von dem Spannungsgenerator 30 generierte Spannung unmittelbar in eine konkrete Windgeschwindigkeit umgerechnet wird. Vielmehr reicht es häufig aus, wenn beispielsweise ein Schalter betätigt oder ein Signal erzeugt wird, sobald die Spannung des Spannungsgenerators 30 einen Schwellwert erreicht hat.

Über die Elektronikschaltung 38 lässt sich der Spannungsgenerator 30 im Umkehrbetrieb auch als Elektromotor für einen Selbsttest betreiben. Dazu wird über eine nicht dargestellte Spannungsquelle eine Gleichspannung auf den Elektromotor gegeben. Der Elektromotor treibt nun als Antriebmittel 30a über die An- und Abtriebswelle 32 und die Kupplung 34 die Welle 16 des Anemometers 10 an. Anhand der Aufnahme von elektrischer Leistung welche für den Betrieb des Elektromotors als Antriebmittel 30a für das Erreichen einer bestimmten Rotationsgeschwindigkeit erforderlich ist, lässt sich das Antriebsmoment errechnen.

Bei einem Widerstand, welcher bspw. durch Lagerreibung der Lager 24 bzw. 26 und/oder Vereisung verursacht sein kann, wird die Leistungsaufnahme der Antriebsmittel 30a messbar größer. Mit Hilfe der Elektronikschaltung 38 wird diese elektrische Leistungsaufnahme des Antriebsmittels 30a erfasst. Aus der so erfassten Leistungsaufnahme wird der Widerstand, der bspw. durch Lagerreibung oder Vereisung hervorgerufen wird, ermittelt. Um die Rotationsgeschwindigkeit $\omega$ der Welle 16 zu erhöhen, ist nämlich ein Antriebsmoment $M_A$ erforderlich. Über das Verhältnis aus Antriebsmoment $M_A$ und einer Rotationsgeschwindigkeitsdifferenz $\Delta\omega$ lässt sich ein zur Lagerreibung proportionaler Wert $M_R$ bestimmen:

$$M_R \sim \frac{M_A}{\Delta\omega}$$

Damit lassen sich Aussagen darüber treffen, wie groß die Verfälschung des Messergebnisses bei einer Windgeschwindigkeitsmessung mit dem Anemometer 10 ist. Wird im Selbsttest eine Schwergängigkeit der Lager 24, 26 erkannt, so wird über die Schnittstelle 42 der Elektronikschaltung 38 ein Fehlersignal ausgegeben.

Die Rotationsgeschwindigkeit lässt sich grundsätzlich auch auf andere Weise bei dem Anemometer 10 ermitteln. So kann die Rotationsgeschwindigkeit beispielsweise durch eine mechanische, optische oder magnetische Anordnung erfasst werden. Dann wird nicht notwendigerweise ein Spannungsgenerator 30 benötigt. Viele Anemometer 10 verfügen über eine Vorrichtung zur Erfassung der Rotationsgeschwindigkeit, jedoch nicht über geeignete Mittel für einen Selbsttest zur Bestimmung von Antriebsmomenten $M_A$. Solche Geräte lassen sich mit einem Elektromotor 30a zur Bestimmung von Antriebsmomenten $M_A$ bequem nachrüsten. Der Elektromotor 30a muss lediglich an die Welle 16 mit der Kupplung 34 gekoppelt wird.

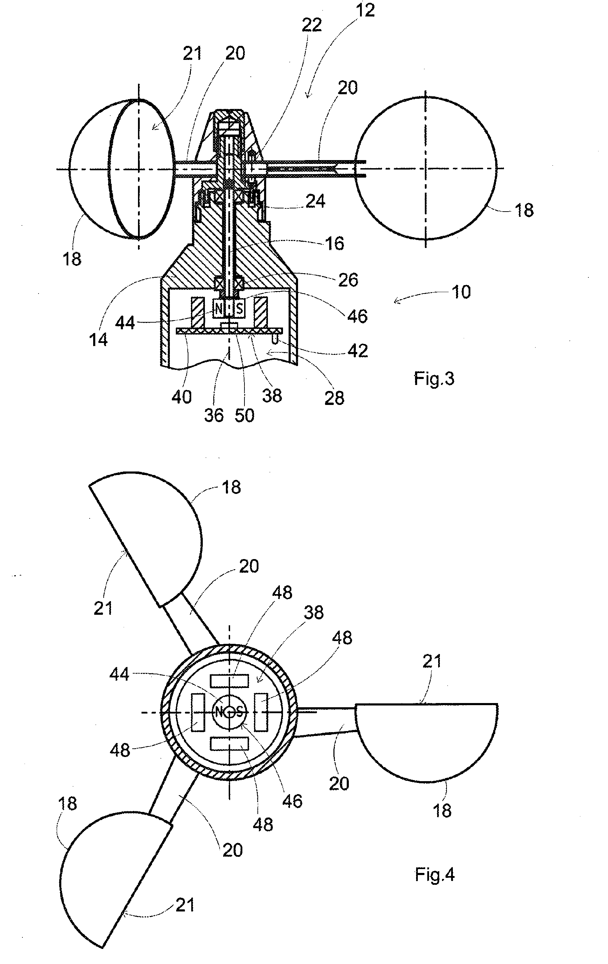

In Fig. 3 wird eine weitere Variante des Schalenstemanemometers 10 dargestellt. Soweit diese Figur identische Bestandteile, wie die vorherigen Figuren, hat, werden entsprechende Bezugszeichen verwendet. Auch hier ist das Windrad 12 an dem oberen Ende der Welle 16 befestigt. Die Welle 16 ist in den Lagern 24, 26 drehbar in dem Gehäuse 14 gelagert. Die Welle 16 mündet wiederum in den Hohlraum 28. An dem unteren Ende der Welle 16 ist ein Magnet 44 mit diametraler Magnetisierung vorgesehen. Der Magnet 44 bildet zusammen mit dem Magnetsensor 50 eine Sensorik zum Erfassen der Rotationsgeschwindigkeit $\omega$. Der Magnetsensor 50 wird bspw. als Hall-Sensor realisiert. Für den Selbsttest bildet der Magnet 44 einen Rotor 46, dessen Pole horizontal ausgerichtet sind. Unterhalb der Welle 16 befindet sich die Elektronikschaltung 38, welche auf der Platine 40 vorgesehen ist. Die Elektronikschaltung 38 enthält im vorliegenden Ausführungsbeispiel den Magnetsensor 50 und vier Statorspulen 48, welche in geeigneter Weise sternförmig um den Magneten 44 der Welle 16 angeordnet sind (vgl. Fig. 4). Die Statorspulen 48 bestehen nur aus Statorwicklungen und sind ohne weichmagnetische Kerne vorgesehen.

Die Statorspulen 48 werden beim Selbsttest, d.h. zum Antrieb der Welle 16, winkelabhängig angesteuert, so dass sie ein magnetisches Drehfeld erzeugen und den Rotor 46 antreiben. Über die Winkelabhängigkeit lässt sich die Rotationsgeschwindigkeit ermitteln.

Fig. 4 zeigt in einer Draufsicht einen Ausschnitt des Schalenstemanemometers 10 gemäß Fig. 3. Das Windrad 12 besteht aus den drei sternförmig angeordneten Speichen 20, an denen die halbkugelförmigen Schalen 18 angebracht sind. Im Zentrum laufen die sternförmig angeordneten Speichen 20 auf die Nabe 22 zu, welche auf das eine Ende der der Welle 16 montiert ist. Am anderen Ende der Welle 16 befindet sich der als Rotor 46 ausgebildete Magnet 44 mit diametraler Magnetisierung. Die Statorspulen 48 sind auf der Platine 40 der Elektroschaltung 38 um den Magneten 44 angeordnet.

Im Selbsttest werden die Statorspulen 48 mit einer elektrischen Spannung der Elektronikschaltung 38 versorgt. Vorzugsweise wird hierzu eine nicht dargestellte 12V oder 24V Spannungsquelle verwendet. Diese Spannungsquellen werden nämlich häufig bei Kraftfahrzeugen oder Maschinen verwendet. Dabei wird die Spannung so auf die Spulen gegeben, dass sie gemeinsam ein magnetisches Drehfeld erzeugen. Die Steuerung hierfür übernimmt die Elektronikschaltung 38. Durch das magnetische Drehfeld wird der Rotor 46, entsprechend einem Schrittmotor, in Bewegung versetzt. Aus der Ansteuerung der Spulen 48 lässt sich die Winkelgeschwindigkeit bzw. die Rotationsgeschwindigkeit $\omega$ auf einfache Weise berechnen. Über die Differenz der Rotationsgeschwindigkeit $\Delta\omega$, die sich bei einem Antrieb der Welle 16 mit einem Antriebsmoment $M_A$ ergibt, kann ein zur Lagerreibung proportionale Wert $M_R$ bestimmt wird.

Wird im Selbsttest eine Schwergängigkeit der Lager erkannt, so wird über die Schnittstelle 42 der Elektronikschaltung 38 ein Fehlersignal ausgegeben.

**Bezugszeichenliste**

| | |
|---|---|
| 10 | (Schalenstern) Anemometer |
| 12 | Windrad / Windaufnahmemittel |
| 14 | Gehäuse |
| 16 | Welle |
| 17 | Befestigungsmittel |
| 18 | Schalen |
| 20 | Speichen |
| 21 | Offene Seiten |
| 22 | Nabe |
| 24 | Lager |
| 26 | Lager |
| 28 | Hohlraum |
| 30 | Spannungsgenerator |
| 30a | Elektromotor |
| 32 | An- bzw. Abtriebswelle |
| 34 | Kupplung |
| 36 | Rotationsachse |
| 38 | Elektronikschaltung |
| 40 | Platine |
| 42 | Schnittstelle |
| 44 | Magnet |
| 46 | Rotor |
| 48 | Statorspulen |
| 50 | Magnetsensor |

**Patentansprüche**

1. Anemometer (10) zum Messen von Windgeschwindigkeiten, wobei das Anemometer (10) als Schalensternanemometer (10) oder als Flügelrad Anemometer ausgebildet ist, enthaltend:

a) ein Gehäuse (14) und/oder Rahmen,
b) eine Welle (16), welche drehbar in einem Lager (24, 26) des Gehäuses (14) und/oder Rahmen gelagert ist,

c) Windaufnahmemittel (12), welche an der Welle (16) angeordnet sind, wobei die Windaufnahmemittel (12) die Welle (16) bei Wind in Rotation versetzt, *wobei die Windaufnahmemittel (12) als halbkugelartige Schalen (18) oder als flügel- oder turbinenartige Schaufeln ausgebildet sind,*
d) Erfassungsmittel (30) zur Erfassung der Rotationsgeschwindigkeit ($\omega$) der Welle (16),
e) Ausgabemittel (30) zur Ausgabe der so erfassten Rotationsgeschwindigkeit ($\omega$),
f) wobei die Erfassungsmittel und die Ausgabemittel als ein Spannungsgenerator (30) ausgebildet sind.
**gekennzeichnet durch**
g) Antriebsmittel (30a) für die Welle (16), wobei Mess- und Verarbeitungsmittel (38) zur Bestimmung und Verarbeitung von Antriebsmomenten ($M_A$) vorgesehen sind, wobei die Antriebsmittel als ein Elektromotor (30a) ausgebildet sind und wobei der Spannungsgenerator (30) im Umkehrbetrieb den Elektromotor (30a) bildet.

2. Anemometer (10) zum Messen von Windgeschwindigkeiten nach Anspruch 1, **dadurch gekennzeichnet, dass** der Elektromotor (30a) als Synchronmotor ausgebildet ist.

3. Anemometer (10) zum Messen von Windgeschwindigkeiten nach einem der Ansprüche 1 oder 2, **dadurch gekennzeichnet, dass** der Elektromotor (30a) als Schrittmotor ausgebildet ist.

4. Anemometer (10) zum Messen von Windgeschwindigkeiten nach einem der Ansprüche 1 bis 3, **gekennzeichnet durch** eine Kupplung (34), mit welcher der Elektromotor (30a) zum Antrieb mit der Welle (16) gekoppelt ist.

**Claims**

1. An anemometer (10) for measuring wind speeds, wherein the anemometer (10) is formed as a cup anemometer (10) or as a vane anemometer, comprising:

a) a housing (14) and / or a frame,
b) a shaft (16) which is mounted rotatable in a bearing (24, 26) of the housing (14) and / or frame,
c) wind receiving means (12) which are arranged on the shaft (16), wherein the wind receiving means (12) set the shaft (16) in rotation in the wind, and wherein the wind receiving means (12) are formed as semi-spherical shells (18) or wing-like or turbine-like blades,
d) detecting means (30) for detecting the rotational speed ($\omega$) of the shaft (16),

e) output means (30) for outputting the detected rotation speed ($\omega$),

f) wherein the detection means and the output means are configured as a voltage generator (30),

**characterized by**

g) drive means (30a) for the shaft (16), wherein measuring and processing means (38) are provided for determining and processing of drive torque ($M_A$), wherein the drive means is formed as an electric motor (30a), and wherein the voltage generator (30) is the electric motor (30a) in reverse operation.

2. An anemometer (10) for measuring wind speeds according to claim 1, **characterized in that** the electric motor (30a) is configured as a synchronous motor.

3. An anemometer (10) for measuring wind speeds according to anyone of claims 1 or 2, **characterized in that** the electric motor (30a) is configured as a stepping motor.

4. An anemometer (10) for measuring wind speeds according to anyone of claims 1 to 3, **characterized by** a coupling (34), with which the electric motor (30a) is coupled to the shaft (16) for driving.

**Revendications**

1. Anémomètre (10) destiné à mesurer les vitesses du vent, l'anémomètre (10) étant réalisé sous forme d'anémomètre à coupelles (10) ou d'anémomètre à hélice, comprenant :

(a) un boîtier (14) et/ou cadre,

(b) un arbre (16) logé de manière à tourner dans un palier (24, 26) du boîtier (14) et/ou cadre,

(c) des moyens d'enregistrement du vent (12) disposés sur l'arbre (16), les moyens d'enregistrement du vent (12) faisant tourner l'arbre (16) en cas de vent, les moyens d'enregistrement du vent (12) étant réalisés sous forme de demi-coquilles (18) ou de pales semblables à des ailettes ou une turbine,

(d) des moyens de saisie (30) destinés à saisir la vitesse de rotation (w) de l'arbre (16),

(e) des moyens d'émission (30) destinés à émettre la vitesse de rotation ($\omega$) ainsi saisie,

(f) les moyens de saisie et les moyens d'émission étant réalisés sous forme de générateur de tension (30),

**caractérisé par**

(g) des moyens d'entraînement (30a) de l'arbre (16), des moyens de mesure et de traitement (38) étant prévus pour déterminer et traiter les couples d'entraînement ($M_A$), les moyens d'entraînement étant réalisés sous forme de moteur électrique (30a) et le générateur de tension (30) formant le moteur électrique (30a) en fonctionnement inversé.

2. Anémomètre (10) destiné à mesurer les vitesses du vent selon la revendication 1, **caractérisé en ce que** le moteur électrique (30a) est réalisé sous forme de moteur synchrone.

3. Anémomètre (10) destiné à mesurer les vitesses du vent selon l'une quelconque des revendications 1 ou 2, **caractérisé en ce que** le moteur électrique (30a) est réalisé sous forme de moteur pas à pas.

4. Anémomètre (10) destiné à mesurer les vitesses du vent selon l'une quelconque des revendications 1 à 3, **caractérisé par** un dispositif d'accouplement (34) permettant de coupler le moteur électrique (30a) à l'arbre (16) pour entraîner celuici.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144606 A1
- US 20070046480 A1
- US 3360989 A
- EP 2037284 A1
- WO 0135109 A1